**Europäisches Patentamt**

**European Patent Office**

**Office européen des brevets**

(11) Numéro de publication: **0 329 527**
**A1**

## DEMANDE DE BREVET EUROPEEN

(21) Numéro de dépôt: **89400353.2**

(22) Date de dépôt: **08.02.89**

(51) Int. Cl.⁴: **B 23 D 39/00**

(30) Priorité: **19.02.88 FR 8802007**

(43) Date de publication de la demande:
**23.08.89 Bulletin 89/34**

(84) Etats contractants désignés: **DE ES FR GB IT**

(71) Demandeur: **Jouenne, Roland**
**37 avenue Charles De Gaulle**
**F-41500 Mer (FR)**

**Tauleigne, Claude**
**225 rue de St-Hilaire Les Muids**
**F-45370 Mareau aux Pres (FR)**

**Clezardin, Jean**
**1 rue George Sand**
**F-41500 Mer (FR)**

(72) Inventeur: **Jouenne, Roland**
**37 avenue Charles De Gaulle**
**F-41500 Mer (FR)**

**Tauleigne, Claude**
**225 rue de St-Hilaire Les Muids**
**F-45370 Mareau aux Pres (FR)**

**Clezardin, Jean**
**1 rue George Sand**
**F-41500 Mer (FR)**

(74) Mandataire: **Robert, Jean-Pierre et al**
**CABINET BOETTCHER 23, rue la Boétie**
**F-75008 Paris (FR)**

(54) **Dispositif de pose et de dépose des outils d'une brocheuse verticale.**

(57) Le dispositif selon l'invention est destiné à manipuler les outils d'une machine à brocher verticale lors de leur échange. Il comprend essentiellement un bâti (1) pourvu en partie supérieure d'un coulisseau (11) mobile verticalement portant un chariot (14) mobile horizontalement, une table tournante (5) avec des moyens (6,7) pour recevoir les broches manipulées par l'ensemble chariot coulisseau. En plus, il comprend un châssis basculeur (18) qui permet de décharger ou recharger le dispositif en faisant passer les broches d'une position horizontale à une position verticale et inversement.

Fig.1

## Description

### Dispositif de pose et de dépose des outils d'une brocheuse verticale

La présente invention concerne un dispositif destiné à faciliter le montage et le démontage des broches, ou plus généralement d'outils longs, sur une brocheuse verticale ou une machine analogue.

Les outils de brochage sont généralement des pièces longues et fragiles en raison de leur faible dimension transversale par rapport à leur longueur. En outre, ce sont des outils dont le poids n'est pas négligeable et implique l'usage d'un engin de manutention, ou la présence de plusieurs personnes.

La manutention des outils de brochage est nécessaire pour procéder aux échanges périodiques des outils en cas de casse ou simplement pour un réaffûtage.

La présente invention entend proposer un dispositif qui, mis en place à côté de la brocheuse, soit de manière permanente, soit occasionnellement, permet une manutention automatique des broches usagées et des broches de remplacement, en préservant ces outils des coups ou des mauvaises manoeuvres dont ils peuvent être l'objet de la part d'opérateurs.

Ce dispositif qui peut donc être mobile, est destiné à servir n'importe quel type de brocheuse, contrairement à ce qui est connu et qui consiste en une adaptation de la brocheuse pour accueillir et changer les broches (Voir notamment le document FR 2 575 951). En outre, il ne présente pas les inconvénients d'une telle adaptation qui limite les possibilités de travail de la machine.

A cet effet, l'invention a pour objet un dispositif de pose et de dépose des outils de coupe d'une machine à axe vertical du type brocheuse, qui comporte un bâti pourvu sur un socle de colonnes verticales sur lesquelles un coulisseau est monté coulissant, ce coulisseau étant équipé de glissières horizontales pour un chariot de transfert des broches, ce chariot comprenant au moins un moyen de préhension de l'extrémité supérieure d'une broche, tandis que le bâti comporte en partie inférieure, d'un côté desdites colonnes au moins un moyen de soutien de la partie inférieure d'une broche monté basculant sur le socle du bâti autour d'un axe horizontal, le chariot étant mobile sur le coulisseau entre une première position dans laquelle le moyen de préhension est situé à l'aplomb du moyen de soutien et une seconde position dans laquelle le moyen de préhension est déporté au delà des colonnes en direction de l'axe vertical de la machine.

Le dispositif de l'invention permet donc de transférer aisément une broche entre un véhicule pour son transport horizontal depuis un atelier d'entretien ou en direction de ce dernier et l'axe vertical de n'importe quelle machine à brocher, à laquelle elle peut être associée, sans aucune modification des caractéristiques de la machine.

Dans un mode de réalisation, le dispositif de l'invention comporte un organe d'attelage amovible du moyen de soutien basculant, à un bras de manoeuvre articulé autour de l'axe de basculement et commandé par un vérin articulé sur le socle à son extrémité libre, ce bras étant solidaire d'un châssis de maintien de la broche placée dans le moyen de soutien basculant lors de son basculement.

Par ailleurs, pour améliorer la souplesse du changement d'outil sur une brocheuse, le dispositif de l'invention comporte, sur le socle susdit, une table horizontale pourvue d'une pluralité de moyens de réception et de soutien des extrémités inférieures des broches, le moyen basculant étant situé sous la table et découvert par cette dernière dans au moins une position déterminée de la table.

Afin de simplifier la construction du dispositif et de diminuer l'amplitude de la course du chariot supérieur, ce dernier comporte au moins deux moyens de préhension qui sont à l'aplomb d'au moins deux moyens de soutien de la table dans la première position du chariot, l'un de ces moyens étant également dans cette position du chariot, à l'aplomb du moyen de soutien basculant.

Enfin, pour augmenter les capacités de magasinage intermédiaire des broches, et pour être adapté aux brocheuses comportant des outils multiples, chaque moyen de préhension et de soutien est constitué par une série d'organes afin de pouvoir accomoder plusieurs broches en même temps,

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

- la figure 1 est une vue générale de côté d'un mode de réalisation préféré du dispositif selon l'invention,

- la figure 2 est une vue partielle de dessus de la table du dispositif avec schématiquement représentés les autres organes essentiels,

- la figure 3 est une vue de côté comme celle de la figure 1 ayant essentiellement trait à l'organe de basculement des broches.

Sur ces figures, on a représenté le dispositif de l'invention dans sa version la plus complète, c'est-à-dire celle qui permet de manipuler plusieurs broches à la fois et de disposer d'un magasin de stockage intermédiaire.

Ainsi, le dispositif selon l'invention est essentiellement constitué par un bâti 1 comprenant un socle de base 2 et deux colonnes verticales 3 liées par une traverse supérieure 4. Sur le socle 2, une table 5 est montée tournante autour d'un axe vertical, grâce à un moteur d'entraînement M disposé entre le socle 2 et la table. Cette table est équipée de deux séries de moyens de réception et de soutien de broches, chacune de ces séries 6 et 7 comportant trois moyens 6a, 6b, 6c et 7a, 7b, 7c, chacun en forme de douille dont l'alésage intérieur est aux dimensions de l'extrémité inférieure d'une broche. Ces dimensions sont en général identiques pour une même famille de broches, et correspondent aux dimensions des moyens de fixation de la broche sur la traverse inférieure de traction ou de guidage de la brocheuse. La hauteur de ces douilles est suffisante pour qu'une broche plantée dans l'une de celles-ci soit suffisamment encastrée et ne puisse pas s'échapper.

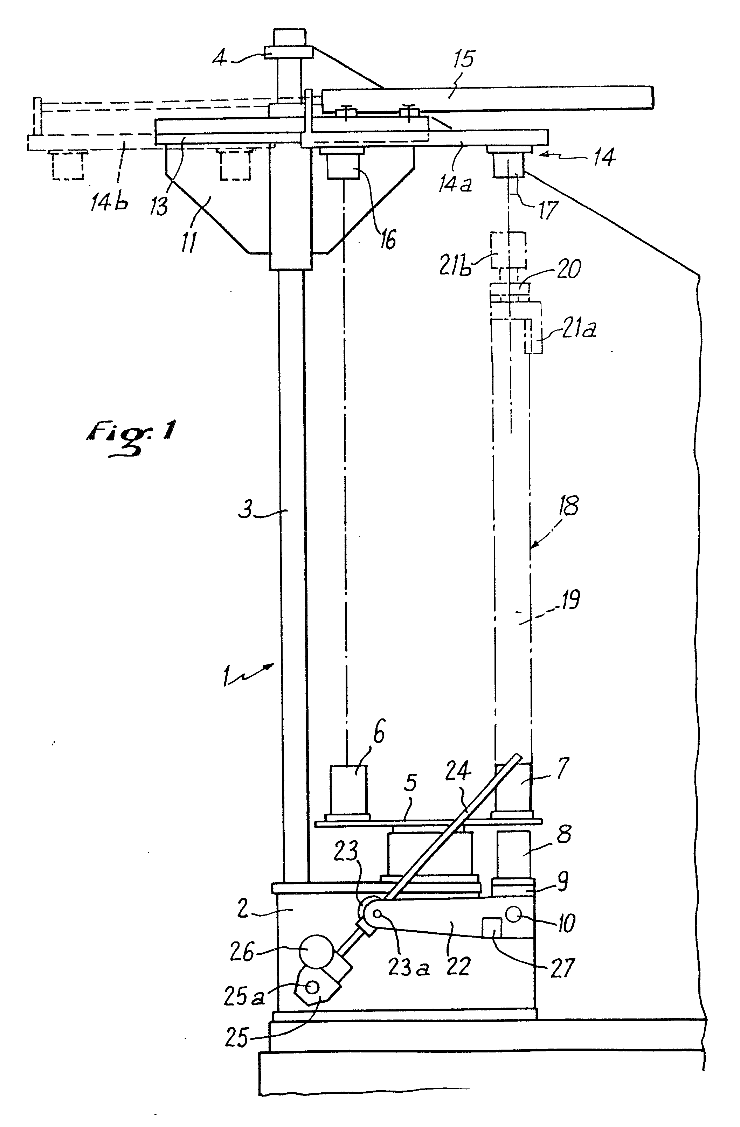

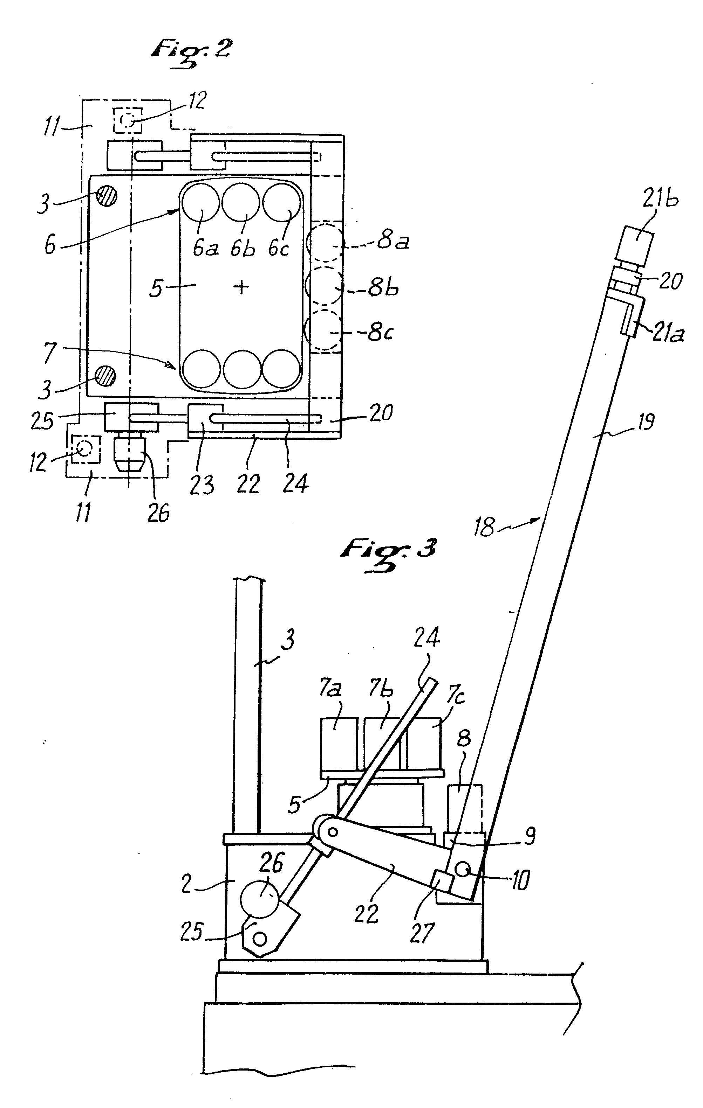

On remarquera que, sous la table 5, le socle 2 comporte une autre série 8 de moyens de soutien 8a, 8b, 8c. Ce sont également des douilles identiques à celles des séries 6 et 7 qui sont montées sur un support commun 9 pouvant pivoter par rapport au socle 2 autour d'un axe 10 orthogonal à l'axe vertical de rotation de la table 5. La distance de ces douilles 8 à l'axe de rotation de la table est identique à celle des douilles 6 et 7. On voit sur la figure 1 que pour une position donnée de la table, les douilles 7 sont immédiatement au-dessus des douilles 8 en en empêchant l'accès. En revanche, les figures 2 et 3 montrent qu'après avoir fait tourner la table d'un quart de tour, on découvre l'accès vertical aux douilles 8, parce que la table 5 est tronquée dans sa partie ne portant pas les moyens 6 et 7.

Les colonnes 3 du bâti de la machine constituent un guide pour un coulisseau 11 dont la manoeuvre le long des colonnes est assurée par des vérins 12 verticaux attelés entre le socle 2 et le coulisseau 11. Ce coulisseau 11 porte des glissières horizontales 13 transversales par rapport aux colonnes entre lesquelles est guidé un chariot 14. Ce chariot est entraîné par un vérin 15 porté par le coulisseau 11 et peut prendre deux positions, l'une 14a où il est en surplomb de la table 5 et l'autre 14b où il est déporté par rapport à cette table au-delà des colonnes 3. Dans cette position 14b, le chariot 14 surplombe la traverse inférieure de tirage de la machine à brocher, qui n'est pas représentée au dessin.

Le chariot 14 est équipé de deux séries 16 et 17 de moyens de préhension de la tête supérieure ou arrière des broches qu'il faut manipuler. Leur disposition sur le chariot 14 est identique à celle des douilles 6 et 7 sur la table 5, si bien que dans la position 14a du chariot et pour la position angulaire représentée à la figure 1 de la table 5, les moyens 16 sont juste en regard des douilles 6. Il en est de même pour l'alignement des douilles 7 et des moyens 17.

Ces moyens 16 et 17 de préhension peuvent être de tout type connus. Il peut s'agir de pinces de forme, de douilles vissables.... manoeuvrées individuellement par des organes d'entraînement non représentés.

Avant de mettre en oeuvre le dispositif selon l'invention pour procéder, par exemple à un échange de broche, il faut libérer la broche de son point d'attache supérieur et la faire reposer sur la traverse inférieure de la machine, qui possède un logement de maintien vertical de la broche, à la manière des douilles 6 et 7 décrites ci-dessus.

On procède alors à la commande du déplacement du chariot 14 pour le placer dans sa position 14b de façon que les moyens de préhension 16 se trouvent à l'aplomb de la ou des broches encore en place sur la machine. La commande des vérins 12 permet d'aller saisir au moins l'une de ces broches en descendant le coulisseau 11 le long des colonnes 3. Les moyens de préhension 16 correspondants étant actionnés, on remonte le coulisseau 11 avec la ou les broches prises. A ce propos, on signalera que les machines à brocher sont souvent multibroches et que les moyens de préhension 16, 17 , comme les moyens de soutien 6, 7 seront prévus en dimension et écartement pour pouvoir recevoir l'ensemble des broches. Un remplacement individuel est cependant toujours possible grâce à l'indépendance de commande du verrouillage des moyens 16 et 17.

Le retour du chariot en position 14a place les broches au droit des moyens de soutien 6 où elles pénètrent lorsque le coulisseau 11 descend. On remonte ensuite le coulisseau 11 afin de faire tourner la table 5 d'un demi-tour. Les douilles 7 se trouvent alors à l'aplomb des pinces ou préhenseurs 16 en étant préalablement pourvues de nouvelles broches; ces préhenseurs viennent agripper les nouvelles broches pour les sortir des douilles 7 et les placer sur la machine (dans des mouvements du chariot et du coulisseau inverses de ceux du démontage). Les broches déposées sont alors situées à l'opposé de la machine à brocher par rapport aux colonnes 3 du fait de la rotation de la table 5 et peuvent être déchargées par tout moyen connu.

L'invention concerne également des moyens pour faciliter le chargement et le déchargement des broches sur ou à partir de la table tournante 5. Ces moyens sont combinés à ceux permettant le transfert table 5-machine à brocher et inversement par le fait qu'ils comportent, au niveau du socle 2 de la machine les douilles 8 basculantes autour de l'axe 10, les moyens de préhension 17 en surplomb de ces douilles lorsque le chariot est dans sa position 14a et un mécanisme 18 de basculement, et de maintien pendant ce basculement, des broches placées dans les douilles 8.

Avant de décrire ce mécanisme 18 on comprend que les nouvelles broches étant mises en place sur la machine, on replace le chariot 14 dans sa position 14a pour descendre le coulisseau 11 au niveau des broches usagées portées par les douilles 6 qui, par rotation de la table 5, sont situées à la place de celles 7 visibles sur la figure 1. Les broches usagées sont donc extraites des douilles correspondantes et la table est animée d'un quart de tour, pour découvrir les douilles 8. Le coulisseau 11 descend alors pour déposer les broches usagées dans les douilles 8, et remonte après les avoir désaisies.

Il s'agit ensuite de déposer ces broches sur un chariot ou un véhicule de manutention, non représenté, qui est avancé à la droite du dispositif sur les figures. Pour ce faire, le mécanisme 18 comporte un châssis comprenant deux montants verticaux 19 articulés autour de l'axe 10 par leur extrémité inférieure et équipés à leur partie supérieure d'une structure 20 de liaison qui porte également des moyens 21 escamotables pour immobiliser, lorsqu'ils sont en service, la tête supérieure des broches que le châssis doit prendre en charge. Ces moyens peuvent être constitués par des organes verrouilleurs de broche 21a entraînés en rotation par des dispositifs de manœuvre 21b.

Le châssis 19 est solidaire, par son extrémité inférieure, de leviers 22 de commande de la manœuvre de sa rotation autour de l'axe 10. Ces leviers, sensiblement perpendiculaires au châssis, portent à leur extrémité libre une noix 23 articulée en 23a qui, taraudée, constitue l'écrou d'un système vis-écrou formant vérin à vis. La vis 24 de ce vérin est articulée au socle en 25a par l'intermédiaire d'un organe d'entraînement en rotation 25 qui peut être un réducteur associé à un moteur 26.

On comprend donc qu'en manœuvrant la vis 24 en rotation, on modifie la géométrie du triangle de sommets 10, 23a et 25a et on peut ainsi faire basculer autour de l'axe 10 le châssis 19, 20 du dispositif 18 depuis une position verticale jusqu'à une position horizontale, au-dessus du chariot de reprise des broches.

En outre les leviers 22 comporte un organe 27 de verrouillage, qui permet de les rendre ou non solidaires de l'embase commune 9 de support des douilles 8. Ainsi les douilles 8 peuvent-elles être également pivotées autour de l'axe 9 en même temps que le châssis 19, 20.

En position d'attente, le basculeur 18 est maintenu dans une inclinaison intermédiaire, comme représenté à la figure 3. Les leviers 22 ne sont pas solidaires du support 9 qui reste maintenu vertical sur le socle 2. L'extrémité 20 du châssis se trouve donc à l'extérieur du volume balayé par le coulisseau 11 lorsqu'il descend le long des colonnes 3, qui, ayant repris les broches usagées, peut les planter comme décrit ci-dessus, dans les douilles 8.

Après la remontée du coulisseau 11 on fait passer le châssis 19, 20 à la position verticale au moyen du système motorisé 24, 25, 26. Les moyens de verrouillage 21a, 21b au sommet du châssis peuvent alors coopérer avec l'extrémité supérieure des broches pour les assujettir au châssis. On procède également au verrouillage du support 9 sur les leviers 22 et on peut alors commander le basculement du châssis dans le sens horaire jusqu'à l'horizontale. Les broches peuvent alors être facilement déposées sur un support approprié

Dans cette position horizontale, on peut également charger un châssis vide, remonter verticalement les broches, dégager le châssis en le plaçant dans sa position d'attente, descendre le coulisseau pour extraire les broches des douilles 8, faire tourner la table pour placer sous les broches des douilles vides (6 ou 7) et y planter les broches nouvelles qui sont alors prêtes pour un prochain remplacement.

Le dispositif selon l'invention peut être installé à demeure au droit d'une machine à brocher. Il peut également être conçu comme un équipement mobile capable de desservir plusieurs machines. Dans le cas d'un équipement mobile, le dispositif selon l'invention comportera avantageusement toutes les prises de branchement nécessaires à son alimentation en énergie (électricité, fluide sous pression...) à partir de la brocheuse, de même que des moyens de connexion aux unités de commande et aux automatismes de la machine qui prendront en charge le fonctionnement synchronisé du dispositif et de la machine. Les moyens de préhension, de maintien et de basculement des broches peuvent être attelés au dispositif de façon à pouvoir être changés et être adaptés aux différentes dimensions de broches et aux différents entre-axes rencontrés sur les machines.

On a décrit ci-dessus une table 5 tournante. Cette table peut être remplacée par une table à mouvement de translation entre une position écartée dans laquelle les organes basculants sont découverts et plusieurs positions dans lesquelles des organes de support choisis sont situés sous les organes de préhension du chariot. La translation de la table sera dans ce cas guidée dans son mouvement sur le socle au moyen de glissières horizontales perpendiculaires au plan de basculement des broches. Elle pourra être constituée par plusieurs plateaux déplaçables de part et d'autre de ce plan.

En outre, on mentionnera une version plus élémentaire du dispositif selon l'invention dans laquelle la table tournante 5 est supprimée. Dans ce cas, le chariot 14 ne comporte qu'une série 16 ou 17 de moyens de préhension des broches et l'amplitude de sa course est telle que cette série de moyens peut être déplacée entre une position à l'aplomb des moyens 8 et une autre position à l'aplomb de la traverse de tirage de la brocheuse, de l'autre côté des colonnes 3 par rapport aux moyens 8 portés par le socle.

Ce dispositif, ne comportant pas de moyens intermédiaires de magasinage des broches neuves ou usagées, permet d'assurer le transfert des broches directement du véhicule d'amenée à l'axe de la machine et inversement.

**Revendications**

1. Dispositif de pose et de dépose des outils de coupe d'une machine à axe vertical du type brocheuse, caractérisé en ce qu'il comporte un bâti (1) pourvu sur un socle (2) de colonnes verticales (3) sur lesquelles un coulisseau (11) est monté coulissant, ce coulisseau étant équipé de glissières horizontales (13) pour un chariot (14) de transfert des broches, ce chariot comprenant au moins un moyen de préhension (16) de l'extrémité supérieure d'une broche, tandis que le bâti (1) comporte en partie inférieure, d'un côté desdites colonnes, au moins un moyen (8) de soutien de la partie inférieure d'une broche monté basculant sur le socle (2) du bâti autour d'un axe (10) horizontal, le chariot (14) étant mobile sur le coulisseau (11) entre une première position dans laquelle le moyen de préhension (16) est situé à l'aplomb du moyen (8) de soutienet une seconde position dans laquelle le moyen (16) est déporté au delà des colonnes (3) en direction de l'axe vertical de la machine.

2. Dispositif selon la revendication 1 caractérisé en ce qu'il comporte un organe d'attelage (27) amovible du moyen de soutien basculant (8), à un bras de manœuvre (22) articulé autour de l'axe de basculement (10) sur le socle (2) et commandé par un vérin (25,26) articulé à son extrémité libre, ce bras (22) étant solidaire d'un châssis (18) de maintien de la broche placée dans le moyen de soutien basculant (8), lors de son basculement.

3. Dispositif selon la revendication 2, caractérisé en ce que le châssis (18) de maintien susdit comporte des organes amovibles (21) d'immobilisation des broches au niveau de leur extrémité supérieure.

4. Dispositif selon l'une quelconque des revendications précédentes, caractérisé en ce qu'il comporte, sur le socle (2), une table horizontale (5) pourvue d'une pluralité de moyens (6, 7) de réception et de soutien des extrémités inférieures des broches, le moyen (8) basculant étant situé sous la table (5) et découvert par cette dernière dans au moins une position déterminée de la table.

5. Dispositif selon la revendication 4 caractérisé en ce que le chariot (14) comporte au moins deux moyens de préhension (16,17) qui sont à l'aplomb d'au moins deux moyens de soutien (6,7) de la table (5) dans la première position du chariot, l'un de ces moyens (17) étant également dans cette position du chariot, à l'aplomb du moyen de soutien basculant (8).

6. Dispositif selon l'une quelconque des revendications précédentes caractérisé en ce que chaque moyen (6, 7, 8) de préhension et de soutien est constitué par une série d'organes (6a,6b,6c ; 7a,7b,7c ; 8a,8b,8c) afin de pouvoir accomoder plusieurs broches en même temps.

Fig. 1

*Fig. 2*

*Fig. 3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 134 038 (MINSKOE SPECIAL'NOE KONSTRUKTORSKOE BJURO PROTJAZNYCH STANKOV, MINSK, SU) <br> * Page 16, lignes 1-19; page 18, lignes 10-20; figures 5,6 * | 1 | B 23 D 39/00 |
| A | DE-A-2 063 433 (KLINK) | 4-6 | |

DOMAINES TECHNIQUES
RECHERCHES (Int. Cl.4)

B 23 D 39/00
B 23 D 41/00
B 23 Q 3/00

Le présent rapport a été établi pour toutes les revendications

| Lieu de la recherche | Date d'achèvement de la recherche | Examinateur |
|---|---|---|
| LA HAYE | 26-05-1989 | BOGAERT F.L. |